**Europäisches Patentamt**

**European Patent Office**

**Office européen des brevets**

(11) Veröffentlichungsnummer: **0 147 814**
**A2**

## (12) EUROPÄISCHE PATENTANMELDUNG

(21) Anmeldenummer: **84116017.9**

(22) Anmeldetag: **20.12.84**

(51) Int. Cl.⁴: **C 04 B 14/18**
**C 04 B 20/06**

(30) Priorität: **21.12.83 DE 3346120**

(43) Veröffentlichungstag der Anmeldung:
**10.07.85 Patentblatt 85/28**

(84) Benannte Vertragsstaaten:
**AT BE CH FR LI LU NL**

(71) Anmelder: **Wüstefeld, Aloys, Dr.**
**Panoramaweg 17**
**D-7035 Waldenbuch(DE)**

(72) Erfinder: **Wüstefeld, Aloys, Dr.**
**Panoramaweg 17**
**D-7035 Waldenbuch(DE)**

(74) Vertreter: **Patentanwälte Kohler - Schwindling - Späth**
**Hohentwielstrasse 41**
**D-7000 Stuttgart 1(DE)**

(54) **Geblähter Perlit.**

(57) Zur Erhöhung der Druckfestigkeit von geblähtem Perlit wird in dessen Oberfläche ein Metalloxid eingelagert, dessen Metall eines der Elemente Nummer 22 bis 29 des periodischen Systems ist. Diese Matalloxide können auch mit Aluminiumoxid Doppeloxide bilden. Ferner können die Metalloxide teilweise durch Calciumaluminatspinell ersetzt sein. Zur Herstellung des geblähten Perlits wird der Rohperlit vor dem Blähen mit feinverteiltem Metalloxid und ggf. Aluminiumoxid sowie ggf. auch Calciumoxid, vorzugsweise in einer Menge von etwa 2 Gew.%, vermischt. Vorteilhaft ist es, die Mischung mit einer wässrigen Flüssigkeit leicht anzufeuchten. Besonders geeignet ist eine 50% ige wässrige Natrium- oder Monoaluminiumphosphatlösung, eine Boraxlösung oder Wasserglas in einer Menge von 2 bis 3 ml auf 100 g Trockenmischung. Das Blähen kann in herkömmlicher Weise unter Verwendung herkömmlicher Vorrichtungen stattfinden.

Anmelder:

Herr
Dr. Aloys Wüstefeld
Panoramaweg 17

7035 Waldenbuch

## Geblähter Perlit

Die Erfindung betrifft geblähten Perlit, dessen Körnchen
an der Oberfläche verfestigt sind.

Maßnahmen der Wärmedämmung kommt eine zunehmende wirtschaftliche Bedeutung zu, insbesondere in der Bauindustrie. Die vorwiegend eingesetzten Isoliermaterialien erfordern die Ausbildung oder Anbringung besonderer Dämmschichten, die wegen ihrer mangelnden mechanischen Stabilität und Wetterfestigkeit keine anderen Funktionen übernehmen können. Es sind zwar Versuche gemacht worden, wärmedämmende Putze zu entwickeln, die sowohl die Schutzfunktion eines normalen Putzes als auch die Rolle einer Wärmedämmschicht übernehmen können. Hierfür werden Zuschlagstoffe benötigt, die einen hohen Dämmwert, eine hohe Festigkeit und endlich auch eine sehr feine Körnung haben, um das Aufbringen einwandfreier Putzschichten zuzulassen. Hervorragende wärmedämmende Eigenschaften hat geblähter Perlit, jedoch fehlt ihm die mechanische Festigkeit. Um geblähten Perlit die notwendige Festigkeit zu verleihen, ist es aus der DE-OS 29 09 652 und der DE-OS 31 03 111 bekannt, die Perlitkörnchen mit einer Glasur zu versehen. Das Aufbringen einer Glasur hat jedoch den Nachteil, daß entweder das Rohperlit vor dem Blähen (DE-OS 31 03 111) oder aber die Perlitteilchen unmittelbar nach dem Blähen (DE-OS 29 09 652) mit einer die Glasur bildenden Masse beschichtet werden müssen, die in dem bei der Glasurbildung erforderlichen Schmelzzustand klebrig wird und dadurch zu einem Zusammenbacken der Perlitteilchen führt, sofern nicht besondere Maßnahmen bei der Wärmebehandlung getroffen werden. Hierdurch wird die Herstellung von geblähtem Perlit, dessen Körnchen mit einer Glasur versehen sind, in industriellem Maßstab bedeutend erschwert.

Der Erfindung liegt die Aufgabe zugrunde, geblähten Perlit
zur Verfügung zu stellen, der die gewünschte hohe Festigkeit
aufweist und doch auch in industriellem Maßstab ohne
komplizierte Verfahrensschritte und ohne Einsatz kostspieliger Ausgangsstoffe herstellbar ist.

Diese Aufgabe wird nach der Erfindung durch einen geblähten
Perlit gelöst, in dessen Oberfläche ein Metalloxid eingelagert ist, dessen Metall eines der Elemente Nummer 22 bis
29 des periodischen Systems ist. Vorzugsweise ist das eingelagerte Metalloxid ein Chromoxid oder insbesondere ein
Manganoxid. Außer den genannten Metalloxiden kann in
die Oberfläche vorteilhaft auch noch Aluminiumoxid
eingelagert sein, das mit den Metalloxiden ein Doppeloxid mit Spinellcharakter bildet. Zur Kostenersparnis
ist es auch möglich, neben reinen Metalloxiden und/oder
Doppeloxiden Calciumoxid in Form von Calciumaluminatspinell einzulagern. Hierdurch kann die Menge an benötigten, relativ teueren Metalloxiden vermindert werden.

Bei dem erfindungsgemäßen Perlit ist demgemäß die Oberfläche
nicht durch Aufbringen einer Glasur verfestigt, sondern
durch die Einlagerung von Metalloxiden, die beim Blähen
des Perlits in die Oberfläche eindiffundieren. Dadurch wird
eine bedeutende Verfestigung der Perlitkörnchen an der
Oberfläche erzielt, ohne daß wie bisher eine größere Menge
schweren Materials eingesetzt werden muß, welches das
Schüttgewicht des Perlits erheblich erhöht. Deshalb hat
nach der Erfindung ausgebildeter Perlit ein Schüttgewicht
im Bereich zwischen 0,15 und 0,20 bei sehr hoher Festigkeit. Die größte Festigkeit hat geblähter Perlit, in dessen
Oberfläche Manganoxid eingelagert ist. Die Verwendung von
Manganoxid hat den weiteren Vorteil, daß es in ausreichenden
Mengen billig zur Verfügung steht.

Ein ganz besonderer Vorteil ergibt sich aus der überraschenden Tatsache, daß der erfindungsgemäße Perlit ähnlich wie Sand dilatant ist, wogegen der in herkömmlicher Weise geblähte Perlit eine deutliche Thixotropie zeigt. Dies bedeutet, daß der erfindungsgemäße Perlit im durchfeuchteten Zustand ebensowenig wie Sand verdichtet werden kann, solange nicht bei sehr hohen Drücken ein Bruch der Perlitkörnchen eintritt. Im Gegensatz dazu ist herkömmlicher Perlit auch im feuchten Zustand noch verdichtbar, weil Perlit ähnlich wie Ton infolge seiner Thixotropie beliebig plastisch verformt werden kann. Die dem Sand ähnliche Dilatanz des erfindungsgemäßen Perlits macht diesen für die Verwendung als Zuschlagstoff zu Mörteln und Putzmassen besonders geeignet.

Die Erfindung hat auch ein Verfahren zur Herstellung des geblähten Perlits zum Gegenstand, in dessen Oberfläche ein Metalloxid eingelagert ist. Bei diesem Verfahren wird das Rohprodukt in herkömmlicher Weise auf die Blähtemperatur erhitzt und bis zum Erreichen des gewünschten Blähgrades gehalten. Um zu dem erfindungsgemäßen Perlit zu kommen, ist es lediglich notwendig, das Rohperlit vor dem Blähen mit fein verteiltem Metalloxid und gegebenenfalls Aluminiumoxid sowie gegebenenfalls Calciumoxid zu vermischen. Dieser Arbeitsgang ist äußerst einfach und mit geringen Kosten durchzuführen. Das Blähen kann dann in herkömmlicher Weise unter Verwendung herkömmlicher Anlagen erfolgen. Dabei ist von besonderem Vorteil, daß durch die Einlagerung von Chrom- und Manganoxid die Oberflächenspannung der beim Blähen an der Oberfläche anschmelzenden Teilchen erhöht wird, was einem Zusammenkleben der Teilchen entgegenwirkt.

Zur Herstellung des erfindungsgemäßen Perlit genügt es, das
oder die Oxide dem Rohperlit in einer Menge von etwa 2 Gew.%
zuzusetzen. Wird diese Menge unterschritten, so nimmt
die Festigkeit des Perlits ab. Bei Überschreiten dieser
Menge wird keine nennenswerte Erhöhung der Festigkeit des
Perlits mehr erzielt, so daß die Zugabe einer größeren
Menge an Metalloxid zwar nicht schädlich, aber auch
wirtschaftlich nicht besonders sinnvoll ist.

Bei der vor dem Blähen herzustellende Mischung aus Rohperlit und Metalloxid kann es sich um eine Trockenmischung
handeln, in die das Metalloxid in feinpulverisierter Form
eingebracht werden kann. Das Eindiffundieren des Metalloxids
in die Oberfläche der Perlitteilchen setzt voraus, daß ein
inniger Oberflächenkontakt zwischen Metalloxid und den
Perlitteilchen besteht. Um einen solchen Kontakt herzustellen und ein Anhaften des Metalloxids an dem Rohperlit zu
gewährleisten, ist es vorteilhaft, den Rohperlit oder
vorzugsweise die das Metalloxid enthaltende Mischung mit
einer wässrigen Flüssigkeit anzufeuchten. Dabei genügt es,
eine Flüssigkeitsmenge von 2 bis 3 ml auf 100 g der Trockenmischung einzusetzen. Neben Wasser kommt zum Anfeuchten
der Mischung beispielsweise eine vorzugsweise 50%ige
Natrium- oder Monoaluminiumphosphatlösung, eine Boraxlösung oder Wasserglas in Frage.

Die folgenden Beispiele dienen zur weiteren Erläuterung der
vorteilhaften Eigenschaften des erfindungsgemäßen Perlits
und des Verfahrens zu seiner Herstellung.

Es wurden insgesamt 7 Proben von je 100 g handelsüblichen Rohperlits zu geblähten Perlit verarbeitet. Dabei wurde eine
Probe in herkömmlicher Weise ohne Zusatz eines Metalloxids
gebläht. Den anderen 6 Proben wurde jeweils eine Menge von
2g Metalloxid zugesetzt, und zwar jeweils eines der Metalloxide Titanoxid, Vanadiumoxid, Chromoxid, Manganoxid,
Kobaltoxid und Kupferoxid. Die Mischung wurde mit 2 ml einer
20%igen Natriumphosphatlösung angefeuchtet. Diese Mischungen wurden dann in herkömmlicher Weise auf eine Blähtemperatur von 1050°C gebracht. Es wurde gegenüber dem
ohne Vorbehandlung geblähten Perlit eine bedeutende Erhöhung der Verdichtung erzielt bei nur mäßiger Erhöhung
des Schüttgewichtes. Das Schüttgewicht ist in g/ml angegeben. Die Verdichtung ist ein Maß für die Druckfestigkeit des Perlits und gibt die Volumenminderung von in einen
Zylinder geschüttetem geblähtem Perlit an, wenn die Menge
mittels eines Stempels einer Belastung von 1 MPa (10 kg/cm$^2$)
ausgesetzt wird. Die Ergebnisse sind in der nachfolgenden
Tabelle zusammengefaßt.

Tabelle

| Metalloxid | Schüttgewicht [g/ml] | Verdichtung [%] |
|---|---|---|
| – ohne – | 0,08 | 50 |
| Titanoxid | 0,14 | 20 |
| Vanadiumoxid | 0,15 | 17 |
| Chromoxid | 0,18 | 7 |
| Manganoxid | 0,20 | 6 |
| Kobaltoxid | 0,15 | 14 |
| Kupferoxid | 0,14 | 20 |

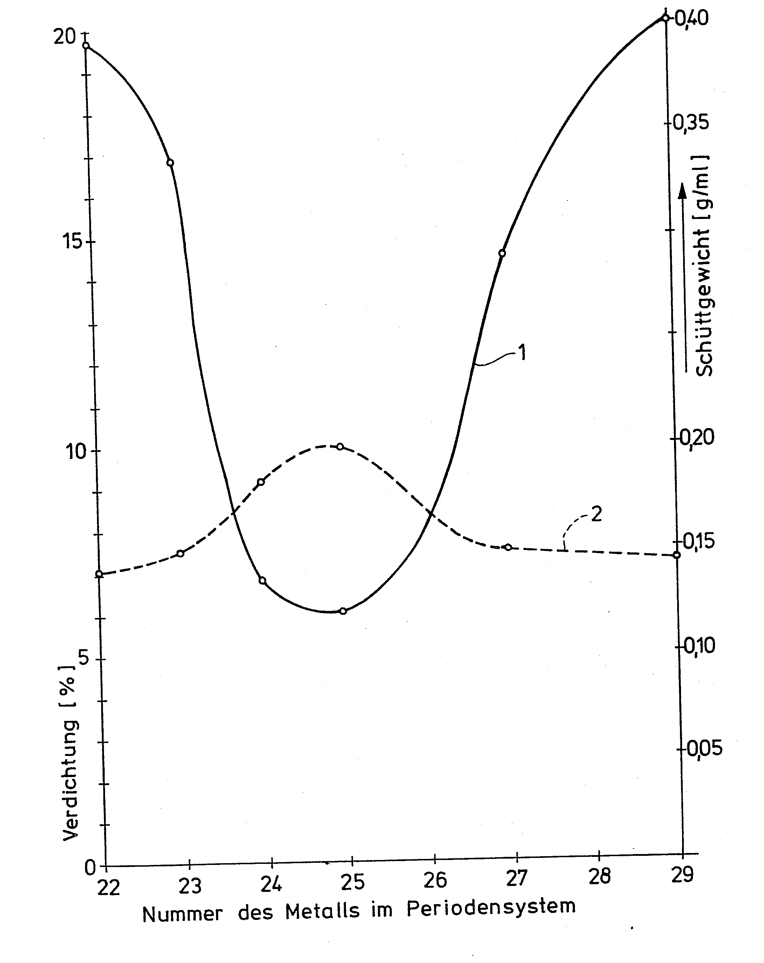

Außerdem ist das Ergebnis der genannten Versuche in der beigefügten Zeichnung graphisch dargestellt. Auf der Abszisse sind die verschiedenen, verwendeten Metalloxide durch die Nummer des Metalls im Periodensystem angegeben. Die ausgezogene Kurve 1 gibt die Druckfestigkeit des behandelten Perlits wieder, wiederum ausgedrückt in der prozentualen Verdichtung, während die gestrichelte Kurve 2 die Variation des Schüttgewichtes anzeigt. Die graphische Darstellung der Meßergebnisse macht besonders deutlich, daß Manganoxid eine außerordentliche Verbesserung der Druckfestigkeit bei nur geringer Erhöhung des Schüttgewichtes ergibt.

Die Brauchbarkeit des erfindungsgemäßen Perlits sowie auch des erfindungsgemäßen Verfahrens im großtechnischen Rahmen ergibt sich aus dem folgenden Beispiel:

Es wurden in einem Betonmischer 100 kg Rohperlit mit der Körnung von 0 bis 1 mm

1,33 kg Manganerz mit 80% $MnO_2$

2,66 kg Aluminiumoxid (Korund) 3 Liter einer 50%igen Monoaluminiumphosphatlösung

gemischt. Die Mischung wurde in konventioneller Weise ohne vorherige Trocknung in einem vertikal stehenden Perlitblähofen gebläht, und zwar im Anschluß an eine zuvor im gleichen Ofen laufende Produktion herkömmlichen Perlits bei einer unveränderten Ofeneinstellung auf 1 100°C. Die Eigenschaften des erhaltenen Produktes sind der folgenden Tabelle zu entnehmen. Die Verdichtungsfähigkeit wurde im durchgefeuchteten Zustand bei einer Belastung von 100N/cm$^2$ ermittelt.

| Perlitschüttdichte | 100 g/l |
| Verdichtungsfähigkeit | 1,10% |
| Korngröße | 47% unter 1 mm |
| | 53% von 1 bis 3 mm. |

Die gleiche Mischung bei einer Ofeneinstellung auf 1050°C ergab folgende Resultate:

| Schüttdichte | 150 g/l |
| Verdichtungsfähigkeit | 0,00% |
| Korngröße | 50% unter 1 mm |
| | 50% von 1 bis 2,5 mm. |

Bei einem weiteren Beispiel wurde eine Mischung von 100 kg Rohperlit mit der Körnung 0 bis 1 mm, 1,33 kg Manganerz mit 80% $MnO_2$, 1,33 kg $Al(OH)_3$ und 3 Liter einer 20%igen Natriumphosphatlösung miteinander vermischt. Das Blähen bei Ofeneinstellungen auf 1100 bzw. 1050°C ergab die gleichen Ergebnisse wie bei den vorangegangenen Versuchen. Die gleichen Ergebnisse wurden auch mit einer Mischung erzielt, die aus 100 kg Rohperlit mit der Körnung von 0 bis 1 mm, 6,66 kg Kalkhydrat $Ca(OH)_2$, 2,4 kg Aluminiumhydroxid $Al(OH)_3$ und 3 kg Natriummetaphosphat $NaPO_3$ bestand.

Bei einem weiteren Beispiel wurde eine Mischung von 100 kg Rohperlit mit einer Körnung 0 bis 1 mm
1,33 kg Manganerz mit 80% $MnO_2$,
1,33 kg Al $(OH)_3$ und
3 Liter Natriumphosphatlösung

hergestellt. Das Blähen bei Ofeneinstellungen auf 1100 bzw. 1050°C ergab die gleichen Ergebnisse wie bei den vorangegangenen Versuchen. Die gleichen Ergebnisse wurden auch erzielt mit einer Mischung, die aus

./.

100   kg Rohperlit mit einer Körnung von 0 bis 1 mm,
6,66 kg Kalkhydrat Ca(OH)$_2$
2,40 kg Aluminiumhydroxid Al(OH)$_3$  und
3,00 kg Natriummetaphosphat NaPO$_3$

bestand. Lediglich die Trockenfestigkeit war etwas geringer
als bei den nach den vorhergehenden Beispielen erzielten
Produkten.


Wie bereits erwähnt, ist von besonderem Vorteil, daß das
erfindungsgemäße Verfahren ohne Schwierigkeiten mit herkömmlichen Vorrichtungen durchgeführt werden kann. Dabei
hat die Verwendung von Manganoxid den besonderen Vorteil,
daß mit einem besonders gut erhältlichen Metalloxid bezüglich Druckfestigkeit die besten Ergebnisse erzielt
werden. Außerdem tritt bei Verwendung von Manganoxid auch
die stärkste Erhöhung der Oberflächenspannung ein, so daß
gerade hier ein Zusammenkleben von Teilchen während des
Blähvorganges ausgeschlossen ist. Die Verwendung einer
Natriumphosphat- oder einer Monoaluminiumphosphatlösung
zum Anfeuchten der Mischung hat den Vorteil, daß dadurch
die Dilatanz des Produktes verbessert wird. Den gleichen
Effekt hat auch eine Zumischung  von Aluminiumoxid oder
Aluminiumhydroxid zu den oben genannten Metalloxiden. Die
Zugabe von Calciumhydroxid, das beim Blähen mit dem Aluminiumoxid oder auch z.B. mit Chromoxid Spinelle bildet,
macht es möglich, die Menge an Metalloxiden zu reduzieren
und dadurch Kosten einzusparen.

Patentansprüche
───────────────

1. Geblähter Perlit, dessen Körnchen an der Oberfläche
   verfestigt sind, dadurch gekennzeichnet, daß in die
   Oberfläche ein Metalloxid eingelagert ist, dessen
   Metall eines der Elemente Nummer 22 bis 29 des periodischen Systems ist.

2. Geblähter Perlit nach Anspruch 1, dadurch gekennzeichnet, daß das eingelagerte Metalloxid ein Chromoxid oder
   insbesondere ein Manganoxid ist.

3. Geblähter Perlit nach Anspruch 1 oder 2, dadurch
   gekennzeichnet, daß das eingelagerte Metalloxid
   mit Aluminiumoxid ein Doppeloxid mit Spinellcharakter
   bildet.

4. Geblähter Perlit nach einem der vorhergehenden
   Ansprüche, dadurch gekennzeichnet, daß neben reinen
   Metalloxiden und/oder Doppeloxiden noch Calciumoxid
   in Form von Calciumaluminatspinell eingelagert ist.

5. Verfahren zur Herstellung von geblähtem Perlit nach
   einem der vorhergehenden Ansprüche, bei dem Rohperlit
   auf die Blähtemperatur erhitzt und bis zum Erreichen
   des gewünschten Blähgrades gehalten wird, dadurch
   gekennzeichnet, daß das Rohperlit vor dem Blähen mit
   feinverteiltem Metalloxid und ggf. Aluminiumoxid
   sowie ggf. auch Calciumoxid vermischt wird.

6. Verfahren nach Anspruch 5, dadurch gekennzeichnet, daß das oder die Oxide dem Rohperlit in einer Menge von etwa 2 Gew.% zugesetzt werden.

7. Verfahren nach Anspruch 5 oder 6, dadurch gekennzeichnet, daß das Rohperlit oder vorzugsweise die Oxide enthaltende Mischung mit einer wässrigen Flüssigkeit angefeuchtet wird.

8. Verfahren nach Anspruch 7, dadurch gekennzeichnet, daß als wässrige Flüssigkeit eine vorzugsweise 50%ige Natrium- oder Monoaluminiumphosphatlösung, eine Boraxlösung oder Wasserglas verwendet wird.

9. Verfahren nach Anspruch 7 oder 8, dadurch gekennzeichnet, daß die Flüssigkeit in einer Menge von 2 - 3 ml auf 100 g Trockenmischung eingesetzt wird.